# EUROPÄISCHE PATENTSCHRIFT

(11) **EP 0 361 374 B1**
(45) Veröffentlichungstag und Bekanntmachung des Hinweises auf die Patenterteilung: **10.11.1993**
(21) Anmeldenummer: 89117705.7
(22) Anmeldetag: 26.09.1989
(51) Int. Cl.: G01D 5/26

(54) **Lichtdetektor**
Light-detecting device
Détecteur de lumière

(30) Priorität: 28.09.1988 DE 3832803
(43) Veröffentlichungstag der Anmeldung: 04.04.1990
(73) Patentinhaber: HOECHST AKTIENGESELLSCHAFT, 65926 Frankfurt am Main (DE)
(72) Erfinder: Groh, Werner, Dr., D-6000 Frankfurt am Main 71 (DE); Coutandin, Jochen, Dr., D-6536 Langenlonsheim (DE); Herbrechtsmeier, Peter, Dr., D-6240 Königstein/Taunus (DE); Theis, Jürgen, Dr., D-6000 Frankfurt am Main (DE)

(56) Entgegenhaltungen:
- EP-A- 0 095 673
- EP-A- 0 115 025
- DE-A- 3 441 498
- GB-A- 1 234 834
- JP-A-60 230 105
- SPIE, Band 840, 20.-21. August 1987, Seite 19; TANAKA et al.: "Fiber Optic Systems for Mobile Platforms"
- PATENT ABSTRACTS OF JAPAN, Band 6, Nr. 265 (P-165)[1143], 24. Dezember 1982; & JP-A-57 160 013 (TATEISHI) 02-10-1982
- OFS THURSDAY 14 FEBRUARY 1985, Seite 148; THGG12: E. THEOCHAROUS: "Fluorescence displacement transducer with a reference channel"
- MEASUREMENT + CONTROL, Band 19, Nr. 1, February 1986, Seiten 4-18; R.S. MEDLOCK: "Review of modulating techniques for fibre optic sensors"
- JEE JNAL OF ELECTRONIC ENGINEERING, Band 18, Nr. 174, Juni 1981, Seiten 80-82; "Photoelectric Switches Have Applications in Position Detecting"

## Beschreibung

Die Erfindung bezieht sich auf einen Lichtdetektor auf der Basis von Fluoreszenzfarbstoffen, welche in transparente Polymerfolien und -fasern eingearbeitet sind.

Bekannt ist, daß bei der seitlichen Einstrahlung von Licht in einen Fluoreszenzfarbstoffe enthaltenden Lichtwellenleiter Fluoreszenzstrahlung erzeugt wird, welche durch Totalreflexion zu den Stirnflächen des Lichtwellenleiters geleitet werden kann (vgl. Tanaka et al., SPIE, Vol, 840 "Fiber Optic Systems for Mobile Platforms", S. 19).

In der EP-A-O 115 025 wird ein optischer Sensor beschrieben, der einen Sensorkörper aus lichtdurchlässigem Material enthält, in welchem Lumineszenzteilchen über das Volumen verteilt angeordnet sind. Das durch Einstrahlung erzeugte Fluoreszenzlicht wird je nach Brechungsindex des den Sensorkörper anschließenden Meßmediums an der Begrenzungsfläche des Sensorkörpers reflektiert und tritt zum anderen Teil unter Richtungsänderung in das Meßmedium aus.

In der JP-A-60 230 105 wird eine mit einem fluoreszierenden Stoff dotierte Faser beschrieben, die mit einem plattenförmigen Körper verbunden ist. UV-Strahlung wird von dem fluoreszierenden Material, welches sich in einer Schicht der Faser befindet, absorbiert. Dabei wird langwelliges Fluoreszenzlicht emittiert und im Kern der Faser zu einem plattenförmigen Photodetektor weitergeleitet.

E.Theocharous ("Fluorescence Displacement Transducer with a Reference Channel"; Third International Conference on Optical Fiber Sensors; February 14, 1985; San Diego, California; Digest of Technical Papers, S. 148, THG G12) beschrieb einen Abstandssensor, durch den der Abstand zwischen einer Fluoreszenz-Lichtquelle und der Stirnfläche einer optischen Faser bestimmt werden kann. Die Lichtintensität, die von der Faser absorbiert wird, ist um so höher, je kleiner der Abstand zwischen Lichtquelle und Stirnfläche der optischen Faser ist. In der Meßanordnung wird als Lichtquelle, eine mit einem fluoreszierenden Stoff dotierte Glasplatte verwendet, an deren Oberfläche die Stirnseite der Faser angebracht ist.

Der vorliegenden Erfindung liegt die Aufgabe zugrunde, einen Lichtdetektor mit räumlicher Trennung von lichtabsorbierendem Körper und lichtempfindlichem Halbleiterelement verfügbar zu machen, der eine gesteigerte Empfindlichkeit aufweist, weniger anfällig gegen Verschmutzung ist, und bei dem die Signalübertragung vom lichtabsorbierenden Körper zum Halbleiterelement besonders effizient verläuft.

Diese Aufgabe wird gelöst durch Bereitstellung eines Lichtdetektors, der aus einem lichtabsorbierenden Körper (1), einem Lichtwellenleiter (2) und einem am Ende des Lichtwellenleiters angebrachten lichtempfindlichen Halbleiterelement (3) besteht, und dadurch gekennzeichnet ist, daß
a) der lichtabsorbierende Körper (1) plattenförmig ausgestaltet ist und aus einem, mit einem Fluoreszenzfarbstoff dotierten, transparenten Polymer besteht,
b) der Lichtwellenleiter (2) aus mindestens einer Faser aufgebaut ist, die an der Schmalseite des lichtabsorbierenden Körpers anliegt und aus mindestens einem, mit einem Fluoreszenzfarbstoff dotierten, transparenten Polymer besteht, und
c) der Emissionsbereich des in (1) enthaltenen Fluoreszenzfarbstoffs mit dem Absorptionsbereich des in (2) enthaltenen Fluoreszenzfarbstoffs überlappt.

Der plattenförmige lichtabsorbierende Körper kann eine beliebige Form haben, vorzugsweise ist er rund oder rechteckig, insbesondere rund. Er kann eine Platte oder Folie sein oder aus einem flachen Bündel Lichtwellenleiter bestehen, die wiederum zu einer Platte zusammengeschmolzen werden können. Vorzugsweise ist er eine Platte oder Folie. Die Dicke beträgt 0,1 bis 5 mm, vorzugsweise 0,25 bis 1,0 mm. Der plattenförmige Körper besteht aus einem transparenten Polymer, beispielsweise aus Polycarbonat, Polyvinylchlorid, Polystyrol oder Polymethylmethacrylat.

Der Lichtwellenleiter kann an der Schmalseite enden oder an der Schmalseite entlang angebracht sein. Vorzugsweise ist der Lichtwellenleiter an der Schmalseite entlang angebracht, er umschließt somit den plattenförmigen Körper an dessen Schmalseite.

Der Lichtwellenleiter kann eine handelsübliche Faser sein, die bevorzugt aus einem transparenten Polymer, beispielsweise Polycarbonat, Polystyrol oder Polymethylmethacrylat im Kern und einem Polymermantel mit niedrigerem Brechungsindex, beispielsweise einem fluorierten Acrylat, besteht.

Zweckmäßigerweise ist der Lichtwellenleiter so dick wie der plattenförmige Körper, vorzugsweise ist er 0,25 bis 1,0 mm dick. An die Stelle eines einzigen Lichtwellenleiters kann auch ein Bündel von Lichtwellenleitern treten.

Plattenförmiger Körper und Lichtwellenleiter enthalten jeweils mindestens einen Fluoreszenzfarbstoff, wobei sich der Wellenlängenbereich der Emission des Plattenfarbstoffes mit dem Wellenlängenbereich der Absorption des Lichtwellenleiterfarbstoffes überlappen muß. Beim Lichtwellenleiter kann sich der Farbstoff sowohl im Kern als auch im Mantel oder in beiden befinden. Geeignete Fluoreszenzfarbstoffe sind insbesondere organische Verbindungen, beispielsweise Perylenfarbstoffe, Benzoxanthene, oder auch anorganische Verbindungen, beispielsweise Zinksulfid.

Trifft Licht geeigneter Wellenlänge, z.B. von einer Lampe oder einer Leuchtdiode, auf den plattenförmigen Körper, so wird in dem Körper Fluoreszenzlicht emittiert, das durch Totalreflexion mit hohem Wirkungsgrad zum Rand geführt wird. Die Totalreflexion findet an den beiden Grenzflächen plattenförmiger Körper/Luft statt. Der plattenförmige Körper kann aber auch mit einer transparenten Polymerschicht mit niedrigerem Brechungsindex beschichtet sein. Am Rand des plattenförmigen Körpers trifft das Fluoreszenzlicht mit hoher Intensität auf die Lichtleitfaser. Die Farbstoffe im Körper und Faser sind so aufeinander abgestimmt, daß der spektrale Emissionsbereich des Körperfarbstoffs mit dem spektralen Absorptionsbereich des Lichtleitfaserfarbstoffs übereinstimmt, so daß das Licht aus dem plattenförmigen Körper Fluoreszenzstrahlung im Lichtwellenleiter erzeugt, die ihrerseits durch Totalreflexion geführt wird und an den Enden des Lichtwellenleiters austritt.
Das lichtempfindliche Halbleiterelement ist beispielsweise eine Silizium-Diode, die die Strahlung nachweist. Die Diode kann kleinflächig und daher rauscharm sein.

Um eine eventuell störende Bestrahlung des Lichtwellenleiters mit Fremdlicht zu vermeiden, kann dieser auf der dem plattenförmigen Körper abgewandten Seite mit einer absorbierenden Schicht, z.B. einer schwarzen Metallfolie, umgeben sein. Transparente Schichten zum Schutz vor mechanischer oder chemischer Beanspruchung oder zur Kontrolle der Totalreflexion können auf dem plattenförmigen Körper oder dem Lichtwellenleiter aufgebracht werden. Um das optische Signal über eine größere Entfernung zum Halbleiterelement zu übertragen, können an das Ende des Fluoreszenz-Lichtwellenleiters dämpfungsärmere Lichtwellenleiter aus Polymer oder Glas angebracht werden.

Die Figuren zeigen Beispiele von bevorzugten Ausführungsformen des erfindungsgemäßen Lichtdetektors.

Figur 1 zeigt einen Lichtdetektor, bei welchem eine dünne runde Platte (1) am Rande eingefaßt ist von einem Lichtwellenleiter (2), dessen beide Enden zu einem lichtempfindlichen Halbleiterelement (3) führen.

Figur 2 zeigt einen Lichtdetektor, bei welchem ein mit einem Fluoreszenzfarbstoff dotiertes Kunststoffplättchen (1) mit einem Lichtwellenleiter (2) verklebt wurde.

Figur 3 zeigt einen Lichtdetektor, bei welchem der plattenförmige Körper (1) aus einem flachen Bündel Lichtwellenleiter besteht und direkt in ein Bündel Lichtwellenleiter (2) übergeht.

Figur 4 zeigt zwei Lichtdetektoren gemäß Figur 3, welche jeweils aus einem plattenförmigen Körper (1) aus einem flachen Bündel Lichtwellenleiter, der direkt in ein rundes Bündel Lichtwellenleiter (2) übergeht, bestehen und sich parallel angeordnet in einem Block (3) aus einem transparenten Gießharz eingebettet befinden. Die Seitenfläche (4) des Blockes (3) ist empfindlich für UV-Strahlung.

Vorteile des erfindungsgemäßen Detektors sind:
- Sehr große empfindliche Fläche möglich, die zudem durch entsprechende Maskierung der Folienfläche beliebig gestaltet werden kann. Zur Maskierung können z.B. nicht-transparente Metall- oder Klebefolien verwendet werden.
- Sehr geringe Bautiefe des Detektors bis herab zu ca. 0,1 mm.
- Rein optische Funktion. d.h. es sind keine elektrischen Zuführungen am Ort des Lichtnachweises erforderlich. Eine Anwendung ist daher auch in Ex-Bereichen möglich.
- Wegen der großen empfindlichen Fläche ist der Detektor unempfindlich gegen Verschmutzungen. Er ist daher für Anwendungen in Lichtschranken und faseroptischen Drehzahlmessern besonders gut geeignet.
- Kein oder nur geringer Justieraufwand durch große Detektorfläche.
- Gute Empfindlichkeit auch bei großflächigen Lichtquellen durch große Detektorfläche.
- Lichtnachweis von beiden Seiten des plattenförmigen Körpers möglich. Falls das Nutzlicht nur von einer Seite eintritt, kann die andere Seite mit einer nicht-transparenten Schicht abgedeckt werden.
- Durch geeignete Wahl der Farbstoff-Konzentration ist es möglich, nur einen kleinen Teil des Meßlichtes nachzuweisen, den Hauptteil aber für weitere Versuche durch den Detektor transmittieren zu lassen. Der Detektor kann daher als Intensitäts- oder Zeitreferenz eingesetzt werden.
- Die spektrale Empfindlichkeit des Detektors ist selektiv im Bereich der Absorption des Fluoreszenzfarbstoffs des plattenförmigen Körpers und kann durch Wahl dieses Farbstoffs dem Meßproblem angepaßt werden.
- Durch Hintereinanderschalten mehrerer plattenförmiger Körper, die mit unterschiedlichen Fluoreszenzfarbstoffen dotiert sind, kann Licht aus verschiedenen spektralen Bereichen getrennt und selektiv nachgewiesen werden. Dadurch ist der Detektor als Empfänger in Anordnungen verwendbar, in denen digital codierte Information mit verschiedenen Wellenlängen in einem Lichtwellenleiter übertragen wird und die Wellenlängenkanäle zum Auslesen der Information bei Empfänger getrennt werden müssen (Wellenlängen-Multiplex).

### Beispiel 1

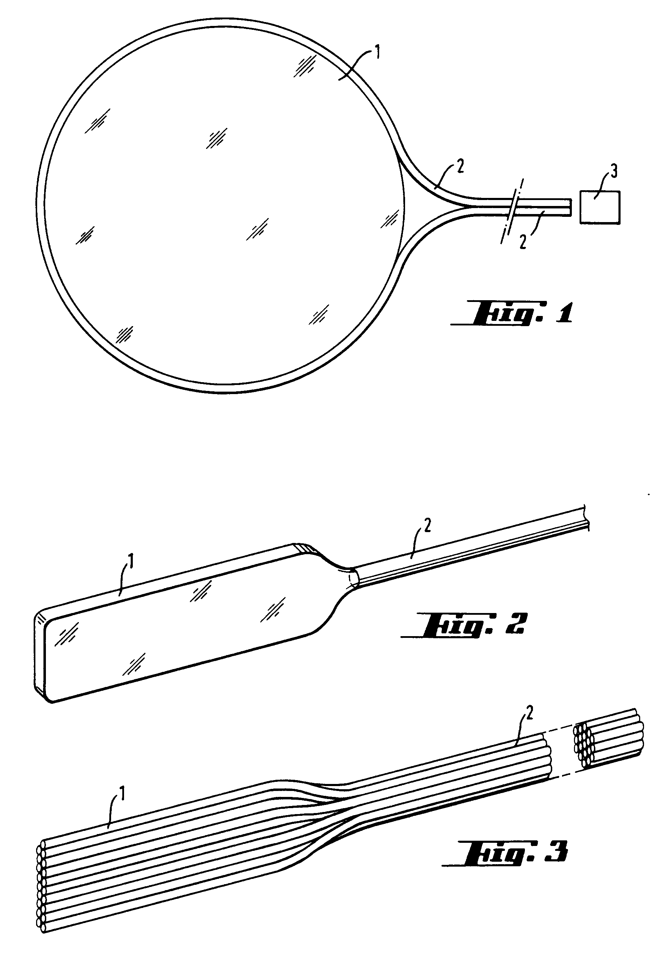

Eine mit einem grünen organischen Fluoreszenzfarbstoff dotierte runde Polycarbonat-Folie (0,45 mm dick, Durchmesser 60 mm) wurde gemäß Figur 1 von einem Lichtwellenleiter umgeben, dessen Polycarbonat-Kern mit einem roten Fluoreszenzfarbstoff dotiert war. Der Emissionsbereich der Folie lag bei 460-620 nm mit einem Maximum bei 500 nm. Der Absorptionsbereich des Lichtwellenleiterfarbstoffs lag im Bereich 500-600 nm mit einem Maximum bei 570 nm. Die Emission erfolgte im Bereich 590-720 nm, das Emissionsmaximum lag bei 610 nm. Der Detektor wurde im Abstand von 2 m mit einer Lampe bestrahlt und konnte so als Lichtschranke eingesetzt werden, die beim Durchgehen einer Person die Unterbrechung des Lichtstrahls anzeigte. Zusätzlich wurde die relative Empfindlichkeit des Detektors als Funktion des Ortes der Lichteinstrahlung aus der Folie bestimmt. Es zeigte sich, daß der Detektor sehr homogen war und die angezeigte Intensität über der gesamten Fläche nur innerhalb ±5 % schwankte.

### Beispiel 2

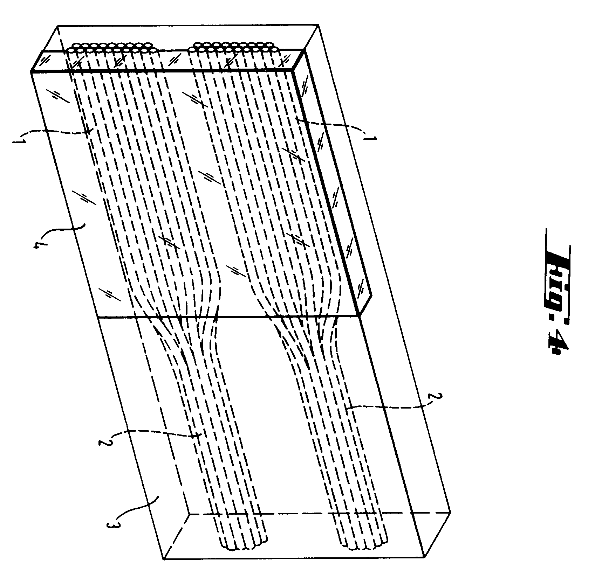

An ein mit einem Fluoreszenzfarbstoff dotiertes PMMA-Plättchen mit 1 cm Breite, 0,5 cm Höhe und 1 mm Dicke wurde gemäß Figur 2 auf der schmalen Seite ein PMMA-Lichtwellenleiter mit 1 mm Durchmesser angesetzt. Der Farbstoff hatte sein Absorptionsmaximum bei 560 nm, das Emissionsmaximum lag bei 605 nm. Das Plättchen wurde vor eine rotierende Scheibe mit einer Öffnung gebracht und von der anderen Seite der Scheibe mit einer grünen Leuchtdiode (λ = 565 nm) bestrahlt. Diese Anordnung stellte einen optischen Drehzahlmesser dar, bei dem die Umdrehungsgeschwindigkeit der Scheibe durch Messung der periodischen Unterbrechung des Lichtstrahls bestimmt wird.

### Beispiel 3

PMMA-Lichtwellenleiter mit 1 mm Durchmesser wurden im Mantel mit fluoreszierenden Pigmenten aus CaSiO₃:Mn,Pb bzw. ZnS:Cu dotiert. Der Mantel bestand aus einem fluorierten Methacrylat mit einem Brechungsindex von 1,42. Durch Zugabe von Mn;Pb bzw. Cu als Sensibilisatoren erfolgte die optimale Anregung des Pigmentes im Wellenlängenbereich < 320 nm bzw. bei 320 - 400 nm. Wurde UV-Licht mit diesen Wellenlängen eingestrahlt, so wurde rotes bzw. grünes Fluoreszenzlicht erzeugt und zu den Faserenden geführt. Leuchtete die rot emittierende Faser auf, so wurde UV-Strahlung < 320 nm nachgewiesen, die als UV-B-Strahlung bekannt ist und bei längerer Bestrahlung der Haut bösartige Tumore hervorrufen kann.
Wurde die andere Faser, die im Bereich 320 - 400 nm empfindlich war, zur Lumineszenz angeregt, lag ungefährliche UV-A-Strahlung vor. Dies wurde durch grünes Licht am Faserende angezeigt. Auf diese Weise erhält man einen einfachen UV-Detektor zur Kontrolle von Solarien und Sonnenbänken.

Ein praktisches Ausführungsprinzip eines solchen Detektors besteht darin, daß ein rot emittierender Detektor gemäß Figur 3 und ein ebensolcher Detektor, welcher grün emittiert, parallel angeordnet und in einem Block aus einem transparenten Gießharz eingebettet werden, wobei eine Seitenfläche des Blockes empfindlich ist für UV-Licht, vgl. Figur 4.

## Patentansprüche

1. Lichtdetektor, bestehend aus einem lichtabsorbierenden Körper (1), einem Lichtwellenleiter (2) und einem am Ende des Lichtwellenleiters angebrachten lichtempfindlichen Halbleiterelement (3), dadurch gekennzeichnet, daß
a) der lichtabsorbierende Körper (1) plattenförmig ausgestaltet ist und aus einem, mit einem Fluoreszensfarbstoff dotierten, transparenten Polymer besteht,
b) der Lichtwellenleiter (2) aus mindestens einer Faser aufgebaut ist, die an der Schmalseite des lichtabsorbierenden Körpers anliegt und aus mindestens einem, mit einem Fluoreszenzfarbstoff dotierten, transparenten Polymer besteht, und
c) der Emissionsbereich des in (1) enthaltenen Fluoreszenzfarbstoffs mit dem Absorptionsbereich des in (2) enthaltenen Fluoreszensfarbstoffs überlappt.

2. Lichtdetektor nach Anspruch 1, dessen Lichtwellenleiter (2) die gesamte Schmalseite des lichtabsorbierenden Körpers (1) umgibt.

3. Lichtdetektor nach Anspruch 1 oder 2, dessen lichtabsorbierender Körper (1) rund ist.

4. Lichtdetektor nach einem oder mehreren der vorhergehenden Ansprüche, dessen lichtabsorbierender Körper (1) 0,1 bis 5 mm dick ist.

5. Verwendung eines Lichtdetektors nach einem oder mehreren der vorhergehenden Ansprüche als Lichtschranke.

## Claims

1. A light detector, composed of a light-absorbing body (1), an optical waveguide (2) and a light-sensitive semiconductor element (3) attached at the end of the optical waveguide, wherein
a) the light-absorbing body (1) is designed to be plate-like and is composed of a transparent polymer doped with a fluorescent dye,
b) the optical waveguide (2) is constructed from at least one fiber which rests on the narrow side of the light-absorbing body and is composed of at least one transparent polymer doped with a fluorescent dye, and
c) the emission region of the fluorescent dye contained in (1) overlaps the absorption region of the fluorescent dye contained in (2).

2. The light detector as claimed in claim 1, the optical waveguide (2) of which surrounds the entire narrow side of the light-absorbing body (1).

3. The light detector as claimed in claim 1 or 2, the light-absorbing body (1) of which is round.

4. The light detector as claimed in one or more of the preceding claims, the light-absorbing body (1) of which has a thickness of 0.1 to 5 mm.

5. Use of a light detector as claimed in one or more of the preceding claims as a light barrier.

## Revendications

1. Détecteur de lumière constitué par un corps (1) absorbant la lumière, un guide d'ondes lumineuses (2) et un élément semiconducteur photosensible (3) placé à une extrémité du guide d'ondes lumineuses, caractérisé en ce que
a) le corps (1) absorbant la lumière est réalisé sous la forme d'une plaque et est constitué par un polymère transparent dopé par un colorant fluorescent,
b) le guide d'ondes lumineuses (2) est constitué par au moins une fibre, qui s'applique contre le petit côté du corps absorbant la lumière et est formée par au moins un polymère transparent dopé par un colorant fluorescent, et
c) la gamme d'émission du colorant fluorescent contenu dans (1) est en chevauchement avec la gamme d'absorption du colorant fluorescent contenu dans (2).

2. Détecteur de lumière selon la revendication 1, dont le guide d'ondes lumineuses (2) entoure l'ensemble du petit côté du corps (1) absorbant la lumière.

3. Détecteur de lumière selon la revendication 1 ou 2, dont le corps (1) absorbant la lumière est circulaire.

4. Détecteur de lumière selon une ou plusieurs des revendications précédentes, dont le corps (1) absorbant la lumière possède une épaisseur comprise entre 0,1 et 5 mm.

5. Utilisation d'un détecteur de lumière suivant une ou plusieurs des revendications précédentes en tant que relais photoélectrique.
